# EUROPEAN PATENT APPLICATION

(11) **EP 3 726 692 A1**
(43) Date of publication of application: **21.10.2020**
(21) Application number: 18887415.0
(22) Date of filing: 28.11.2018
(51) Int. Cl.: H02J 7/00

(54) **EXPANDABLE CHARGING AND BATTERY REPLACING DEVICE, AND CHARGING AND DISCHARGING UNIT THEREOF**

(30) Priority: 15.12.2017 CN 201721767759 U
(71) Applicant: Nio Nextev Limited, Hong Kong (CN)
(72) Inventor: WU, Guangtao, Shanghai 201804 (CN); WAN, Bingbing, Shanghai 201804 (CN); CHEN, Xiaoyu, Shanghai 201804 (CN); CHEN, Jiong, Shanghai 201804 (CN)
(74) Representative: Patentwerk B.V.
(86) International application number: PCT/CN2018/117848
(87) International publication number: WO 2019/114547

(57) **Abstract**

Disclosed are an expandable battery charging and swapping apparatus, and a charging and discharging unit (2) thereof, which relate to the technical field of battery charging and swapping. The charging and discharging unit (2) is equipped with a current-voltage conversion module (22) and a control module (21), respectively. The battery charging and swapping apparatus is provided with a plurality of power supply output ends (15) in advance, and the charging and discharging unit (2) can control, when an input end thereof is connected to the power supply output end (15), the current-voltage conversion module (22) to charge an electric vehicle or a traction battery (3) of the electric vehicle by means of the control module (21). The capacity of the above battery charging and swapping apparatus can be expanded rapidly without reconstruction, reducing engineering workloads and saving on costs, thereby solving the problems of heavy engineering workloads and high costs for expanding the capacity of an existing battery charging and swapping station.

## Description

### Technical Field

The invention relates to the technical field of battery charging and swapping, and in particular to an expandable battery charging and swapping apparatus and a charging and discharging unit thereof.

### Background Art

There are mainly two types of electric vehicles, rechargeable and battery-swappable electric vehicles, wherein the battery-swappable electric vehicle means to replace a used traction battery in the electric vehicle with a fresh traction battery from a battery charging and swapping station. The battery swap time for the battery-swappable electric vehicle is much shorter than the time required for a rechargeable electric vehicle to be fully charged. Therefore, the battery-swappable electric vehicle is accepted by more and more people because of its advantage of rapid energy replenishment.

Generally, the number of traction batteries placed in the battery charging and swapping station is a fixed value. With increasing use of battery-swappable electric vehicles, the number of traction batteries in the battery charging and swapping station can no longer meet daily battery swap needs for users. Therefore, it is necessary to expand the capacity of the battery charging and swapping station, that is, to redesign, wire, and debug the existing battery charging and swapping station, which requires not only large engineering workloads but also high costs.

Accordingly, there is a need for a novel expandable charging and discharging device in the art to solve the above problems.

### Summary of the Invention

In order to solve the above problems in the prior art, that is, to solve the problems of large engineering workloads and high costs for expanding the capacity of the existing battery charging and swapping apparatus, the invention provides a charging and discharging unit for an expandable battery charging and swapping apparatus. The charging and discharging unit comprises a current-voltage conversion module and a control module connected to the current-voltage conversion module, wherein an input end of the current-voltage conversion module is connected to a power supply output end of the battery charging and swapping apparatus, an output end of the current-voltage conversion module is connected to an object to be charged, the current-voltage conversion module is used for converting a current and/or voltage output by the battery charging and swapping apparatus into a current and/or voltage required by the object to be charged, and the control module is used for controlling an operation state of the current-voltage conversion module.

In a preferred technical solution of the above charging and discharging unit, the current-voltage conversion module comprises a plurality of current-voltage conversion submodules connected in parallel, and each of the current-voltage conversion submodules is connected to the control module, respectively, such that the control module can control an operation state of each of the current-voltage conversion submodules, respectively.

In a preferred technical solution of the above charging and discharging unit, each of the current-voltage conversion submodules is equipped with a first switch, respectively, connected to the control module, the control module controlling the operation states of the current-voltage conversion submodules by controlling opening and closing of the first switch.

In a preferred technical solution of the above charging and discharging unit, the charging and discharging unit further comprises a second switch connected to the control module, the current-voltage conversion module connected to the power supply output end of the battery charging and swapping apparatus through the second switch; and/or the charging and discharging unit further comprises a third switch connected to the control module, the current-voltage conversion module connected to the object to be charged through the third switch.

In a preferred technical solution of the above charging and discharging unit, the charging and discharging unit further comprises a protection module communicatively connected to the control module, the protection module used to monitor an operation condition of the current-voltage conversion module and to signal the control module to open the second switch and/or the third switch when the current-voltage conversion module fails.

In a preferred technical solution of the above charging and discharging unit, the object to be charged is an electric vehicle or a traction battery of the electric vehicle.

In addition, the invention further provides an expandable battery charging and swapping apparatus. The battery charging and swapping apparatus comprises a plurality of the charging and discharging units according to any of above preferred technical solutions.

In a preferred technical solution of the above battery charging and swapping apparatus, the battery charging and swapping apparatus further comprises a main control module, the main control module connected to each of the charging and discharging units, respectively, and the main control module used to collect and/or control the operation state of each of the charging and discharging units.

In a preferred technical solution of the above battery charging and swapping apparatus, the battery charging and swapping apparatus further comprises a plurality of power supply output ends, each of the charging and discharging units connected to one of the power supply output ends, respectively.

In a preferred technical solution of the above battery charging and swapping apparatus, the battery charging and swapping apparatus is a battery charging and swapping cabinet or a battery compartment.

Those skilled in the art can understand that, in a preferred technical solution of the invention, each charging and discharging unit is equipped with a separate current-voltage conversion module, respectively, such that each charging and discharging unit can provide a charging service for an object to be charged; and each charging and discharging unit is equipped with a separate control module, respectively, such that the activation of each current-voltage conversion module can be controlled by its corresponding control module. Therefore, the charging and discharging unit of the invention can independently provide a charging service for an object to be charged when the input end is powered on.

Further, the battery charging and swapping apparatus is provided with a plurality of power supply output ends in advance, such that the input end of the charging and discharging unit, when connected to one of the power supply output ends, can provide a charging service for an object to be charged. Therefore, the capacity of the battery charging and swapping apparatus in the invention can be expanded rapidly as required, i.e., by adding charging and discharging units, without the need to reconstruct, wire, and debug the battery charging and swapping apparatus, thus reducing the engineering workloads and saving on the costs.

### Brief Description of the Drawings

The preferred embodiments of the invention will be described below with reference to the drawings and in conjunction with a battery charging and swapping cabinet. In the drawings:
Fig. 1 is a schematic effect diagram of a battery charging and swapping cabinet of the invention;
Fig. 2 is a system schematic diagram of a battery charging and swapping cabinet of the invention;
Fig. 3 is a schematic diagram of a current-voltage conversion module of the invention.

### List of reference numerals:

1. Cabinet body; 11. main control module; 12. first insertion frame; 13. second insertion frame; 14. power supply busbar; 15. power supply output end; 2. charging and discharging unit; 21. control module; 22. current-voltage conversion module; 221. current-voltage conversion submodule; 222. first switch; 23. second switch; 24. third switch; 25. fourth switch; 3. traction battery; 31. BMS controller; and 32. battery pack.

### Detailed Description of Embodiments

It should be understood by those skilled in the art that embodiments in this section are merely used to explain the technical principle of the invention and are not intended to limit the scope of protection of the invention. For example, although the expandable battery charging and swapping apparatus of the invention is illustrated by taking a battery charging and swapping cabinet for an electric vehicle as an example, the expandable battery charging and swapping apparatus of the invention may alternatively be a charging pile for an electric vehicle, a battery charging and swapping station for an electric vehicle, a battery swap station for an electric vehicle, etc. Those skilled in the art can make adjustments as needed to adapt to specific applications, and the adjusted technical solutions will still fall within the scope of protection of the invention.

It should be noted that, in the description of the invention, the terms that indicate the direction or positional relationship, such as "center", "upper", "lower", "left", "right", "vertical", "horizontal", "inner" and "outer", are based on the direction or positional relationship shown in the figures, which is merely for ease of description and not to indicate or imply that the device or element must have a particular orientation and be constructed and operated in a particular orientation, and therefore, should not be construed as limiting the invention. In addition, the terms "first", "second" and "third" are for descriptive purposes only and should not be construed as indicating or implying relative importance.

In addition, it should also be noted that, in the description of the invention, the terms "install", "couple" and "connect" should be interpreted broadly, unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For those skilled in the art, the specific meaning of the above terms in the invention can be interpreted according to the specific situation.

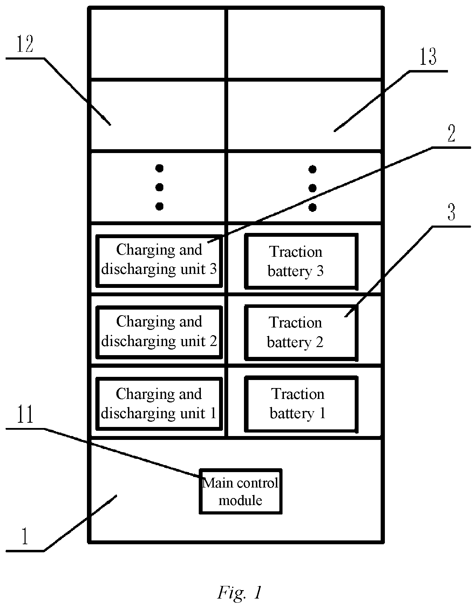

As shown in Fig. 1, a battery charging and swapping cabinet in the invention mainly comprises a cabinet body 1, charging and discharging units 2 and traction batteries 3 provided in the cabinet body 1. The cabinet body 1 is provided with a main control module 11, a plurality of first insertion frames 12 for accommodating the charging and discharging units 2 and a plurality of second insertion frames 13 for accommodating the traction batteries 3, wherein, the main control module 11 is used to collect and/or control the operation state of each charging and discharging unit 2, respectively, that is, to control whether each charging and discharging unit 2 provides a charging service for its corresponding traction battery 3 and to control the output power of each charging and discharging unit 2.

In a preferred embodiment of the invention, the number of the first insertion frames 12 and the second insertion frames 13 provided in the cabinet body 1 is greater than the number of the charging and discharging units 2 and traction batteries 3, such that only a small amount of charging and discharging units 2 and traction batteries 3 may be released onto the market and can already meet the market demands when the battery charging and swapping cabinet operates in an early stage. When there are more battery-swappable electric vehicles in the market, the battery charging and swapping cabinet can increase the number of charging and discharging units 2 and traction batteries 3 as needed. It not only saves on the costs, but also facilitates the capacity expansion of the battery charging and swapping cabinet. Alternatively, those skilled in the art may add more of the first insertion frames 12 and second insertion frames 13 to the cabinet body 1 when the capacity of the battery charging and swapping cabinet needs to be expanded as needed.

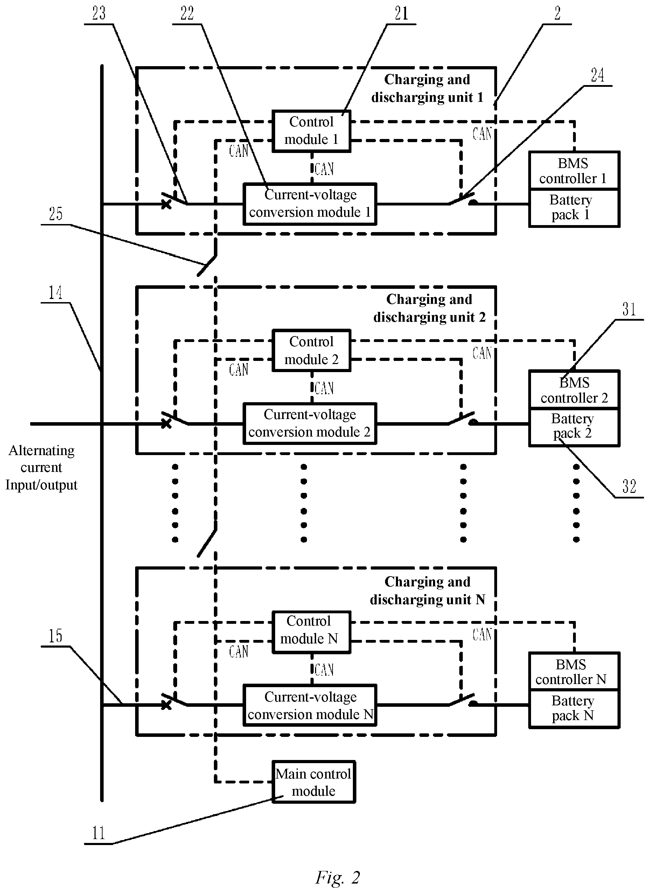

As shown in Fig. 2, the cabinet body 1 is further provided with a power supply busbar 14 and a plurality of power supply output ends 15 connected to the power supply busbar 14. When the charging and discharging units 2 are inserted into the first insertion frames 12, the input ends of the charging and discharging units 2 can be electrically connected to the power supply output ends 15.

Although not shown in the figure, in a preferred embodiment of the invention, each power supply output end 15 is provided with a normally open switch to prevent the power supply output end 15 from being accidentally touched by an operator to get an electric shock when the power supply output end 15 is not connected to the charging and discharging unit 2. Further, each of the above normally open switches is connected to the main control module 11, such that when the power supply output end 15 is connected to the charging and discharging unit 2, the main control module 11 can close the corresponding normally open switch, thereby connecting the power supply output end 15 to the charging and discharging unit 2. Alternatively, those skilled in the art may also configure the above normally open switch as a mechanically controlled switch that can be touched by the charging and discharging unit 2 inserted into the first insertion frame 12 according to requirements, such that the normally open switch closes in time when the charging and discharging unit 2 is inserted into the first insertion frame 12, thereby connecting the power supply output end 15 to the charging and discharging unit 2.

As shown in Figs. 1 and 2, when the traction battery 3 is inserted into the second insertion frame 13, the output end of the charging and discharging unit 2 is connected to the traction battery 3, which can provide the charging service for the traction battery 3.

Continuing to refer to Fig. 2, the charging and discharging unit 2 of the invention mainly comprises a control module 21, a current-voltage conversion module 22, a second switch 23, a third switch 24 and a fourth switch 25, wherein, the control module 21 is communicatively connected to the current-voltage conversion module 22 via a CAN bus, and the control module 21 is connected to the second switch 23, the third switch 24, and the fourth switch 25, respectively, via a signal line, such that the control module 21 can control the opening and closing states of the second switch 23, the third switch 24, and the fourth switch 25, and control the output current and/or voltage magnitude and other operation states of the current-voltage conversion module 22.

As shown in Fig. 2, each of the second switch 23, the third switch 24 and the fourth switch 25 is a normally open switch, such that the current-voltage conversion module 22 is disconnected from the power supply output end 15 and the traction battery 3, respectively, in an initial state. In addition, those skilled in the art may also configure the second switch 23, the third switch 24 and the fourth switch 25 as normally closed switches as needed. It can be easily seen from Fig. 2 that the second switch 23 is used to control the connection and disconnection between the current-voltage conversion module 22 and the power supply output end 15, the third switch 24 is used to control the connection and disconnection between the current-voltage conversion module 22 and the traction battery 3, and the fourth switch 25 is used to control the connection and disconnection between the control module 21 and the main control module 11. When the fourth switch 25 is closed, the main control module 11 can cause the charging and discharging unit 2 to perform a corresponding operation by means of the control module 21. Those skilled in the art can understand that the function of the fourth switch 25 here is mainly to connect the main control module 11 and the control module 21, and therefore, the fourth switch 25 can also be replaced by any other feasible connection terminal.

As shown in Figs. 1 and 2, the traction battery 3 mainly comprises a BMS controller 31 and a battery pack 32. When the traction battery 3 is inserted into the second insertion frame 13, the battery pack 32 is connected to the current-voltage conversion module 22 through the third switch 24, and the BMS controller 31 is connected to the control module 21 via the CAN bus. The control module 21 can monitor the state of charge of the battery pack 32 in real time via the BMS controller 31, and open the second switch 23 and/or the third switch 24 when the battery pack 32 is fully charged.

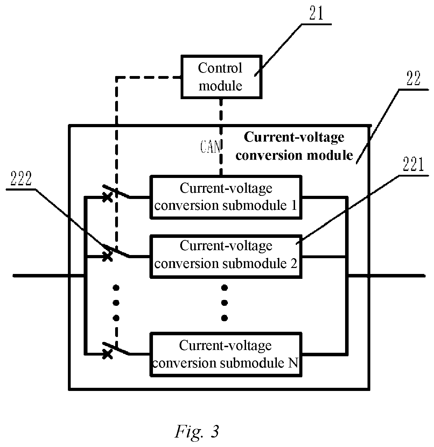

As shown in Fig. 3, in a preferred embodiment of the invention, each current-voltage conversion module 22 further comprises a plurality of current-voltage conversion submodules 221 connected in parallel, and each of the current-voltage conversion submodules 221 is further equipped with a first switch 222 controlled by the control module 21. The number of current-voltage conversion submodules 221 connected in parallel to an energizing circuit may be changed by switching the opening and closing state of the first switch 222. Those skilled in the art can understand that the output power of the current-voltage conversion module 22 can be changed by changing the number of current-voltage conversion submodules 221 connected in parallel in the circuit, such that the current-voltage conversion module 22 provides different charging modes for the traction battery 3, such as providing a high-power charging service when fast charging is required, and a low-power charging service when slow charging is required.

Although not shown in the figure, the charging and discharging unit 2 of the invention further comprises a protection module that is communicatively connected to the control module 21. The protection module is used to monitor the operation state of the current-voltage conversion module 22 in real time and to send a signal to the control module 21 when the current-voltage conversion module 22 fails, such that the control module 21 opens the second switch 23 and/or the third switch 24. Alternatively, those skilled in the art may further provide a protection module for each current-voltage conversion submodule 221 according to requirements, so as to protect each current-voltage conversion submodule 221 in real time, and when one of the current-voltage conversion submodules 221 fails, other current-voltage conversion submodules 221 that are not connected in parallel are selected to replace the failed one and connected in parallel into the circuit. Those skilled in the art can understand that the failure mentioned above includes overloading, a short circuit, an open circuit, etc.

It should be noted that, where the current-voltage conversion module 22 can realize the above functions, only one of the second switch 23 and the third switch 24 may be selectively provided.

In summary, when expanding the capacity of the battery charging and swapping cabinet of the invention, it is only necessary to insert the traction battery 3, the charging and discharging unit 2 with the independent control module 21 and the independent current-voltage conversion module 22 into the first insertion frame 12 and second insertion frame 13 that are provided in advance. There is no need to reconstruct, wire and debug the battery charging and swapping cabinet, thus reducing the engineering workloads and saving on the costs.

Those skilled in the art can understand that the battery charging and swapping cabinet of invention can also feed back the electric energy in the traction battery 3 to a power grid through the charging and discharging units 2 at the peak of urban power consumption.

Although not shown in the figures, in another embodiment of the invention, the charging and discharging unit 2 may be alternatively disposed in the battery compartment. A plurality of storage units for storing the traction batteries 3 are provided in the battery compartment, and one charging and discharging unit 2 is provided for each storage unit, such that the charging and discharging unit 2 provides the charging and discharging service for the traction battery 3 placed in each storage unit. Alternatively, those skilled in the art may reserve several idle storage units according to requirements, and then provide the charging and discharging units 2 for those storage units when required for use later.

Heretofore, the technical solutions of the invention have been described with reference to the preferred embodiments shown in the accompanying drawings; however, those skilled in the art can readily understand that the scope of protection of the invention is obviously not limited to these particular embodiments. Without departing from the principle of the invention, those skilled in the art may make equivalent changes or substitutions on related technical features, and the technical solutions after these changes or substitutions fall into the scope of protection of the invention.

## Claims

1. A charging and discharging unit for an expandable battery charging and swapping apparatus, **characterized by** comprising a current-voltage conversion module and a control module connected to the current-voltage conversion module,
wherein an input end of the current-voltage conversion module is connected to a power supply output end of the battery charging and swapping apparatus, an output end of the current-voltage conversion module is connected to an object to be charged, the current-voltage conversion module is used for converting a current and/or voltage output by the battery charging and swapping apparatus into a current and/or voltage required by the object to be charged, and
the control module is used for controlling an operation state of the current-voltage conversion module.

2. The charging and discharging unit for an expandable battery charging and swapping apparatus according to claim 1, **characterized in that** the current-voltage conversion module comprises a plurality of current-voltage conversion submodules connected in parallel, and each of the current-voltage conversion submodules is connected to the control module, respectively, such that the control module can control an operation state of each of the current-voltage conversion submodules, respectively.

3. The charging and discharging unit for an expandable battery charging and swapping apparatus according to claim 2, **characterized in that** each of the current-voltage conversion submodules is equipped with a first switch, respectively, connected to the control module, the control module controlling the operation states of the current-voltage conversion submodules by controlling opening and closing of the first switch.

4. The charging and discharging unit for an expandable battery charging and swapping apparatus according to claim 1, **characterized in that** the charging and discharging unit further comprises a second switch connected to the control module, the current-voltage conversion module connected to the power supply output end of the battery charging and swapping apparatus through the second switch;
and/or the charging and discharging unit further comprises a third switch connected to the control module, the current-voltage conversion module connected to the object to be charged through the third switch.

5. The charging and discharging unit for an expandable battery charging and swapping apparatus according to claim 4, **characterized by** further comprising a protection module communicatively connected to the control module, the protection module used to monitor an operation condition of the current-voltage conversion module and to signal the control module to open the second switch and/or the third switch when the current-voltage conversion module fails.

6. The charging and discharging unit for an expandable battery charging and swapping apparatus according to any of claims 1-5, **characterized in that** the object to be charged is an electric vehicle or a traction battery of the electric vehicle.

7. An expandable battery charging and swapping apparatus, **characterized by** comprising a plurality of the charging and discharging units according to any of claims 1-6.

8. The expandable battery charging and swapping apparatus according to claim 7, **characterized by** further comprising a main control module, the main control module connected to each of the charging and discharging units, respectively, and the main control module used to collect and/or control the operation state of each of the charging and discharging units.

9. The expandable battery charging and swapping apparatus according to claim 8, **characterized by** further comprising a plurality of power supply output ends, each of the charging and discharging units connected to one of the power supply output ends, respectively.

10. The expandable battery charging and swapping apparatus according to any of claims 7-9, **characterized in that** the battery charging and swapping apparatus is a battery charging and swapping cabinet or a battery compartment.
